# EUROPEAN PATENT SPECIFICATION

(11) **EP 3 328 000 B1**
(45) Date of publication and mention of the grant of the patent: **10.07.2019**
(21) Application number: 17382388.1
(22) Date of filing: 22.06.2017
(51) Int. Cl.: H04L 12/28, H04L 29/06, E05F 15/42, E05F 15/70, E05F 15/71, E05F 15/72

(54) **HOME AUTOMATION CONTROL DEVICE AND CONTROL METHOD THEREOF**
HEIMAUTOMATIONSSTEUERUNGSVORRICHTUNG UND STEUERUNGSVERFAHREN DAFÜR
DISPOSITIF ÉLECTRONIQUE, DISPOSITIF DE COMMANDE ET PROCÉDÉ DE COMMANDE CORRESPONDANT

(43) Date of publication of application: 30.05.2018
(73) Proprietor: Sisteplast PVC, S.L., 30320 Murcia (ES)
(72) Inventor: Fuertes Barberá, Julio, 30320 Murcia (ES); Pérez Torres, Francisco, 30320 Murcia (ES)
(74) Representative: Ballester Cañizares, Rosalia

(56) References cited:
- US-A1- 2014 167 928
- US-A1- 2015 097 689
- US-A1- 2017 095 103
- US-B1- 9 677 327

## Description

The purpose of this invention is an automation control device that consists of an intelligent window or door capable of offering the user a series of services, alarms and information about what it perceives around it.

### State of the art

In prior art different systems of intelligent doors and windows are known, generally focused on security systems, such as for example document WO2006103305 which describes an intelligent emergency window, that primarily deals with opening safety in case of accidents, a very important factor in passenger transport vehicles, being a problem of vital necessity; the emergency window, is aimed at any means of transport that uses emergency windows, such as trains, buses, microbuses or others with passengers, and is based on an operating device, commanded automatically or manually, near or inside the vehicle, which according to the accident by collision, tilting, overturning, excessive temperature or others, sends an order to the operating system, which activates operating mechanisms that allow the unlocking sets to slide with the automatic expulsion of the removable frame opening 1 window and leaving a large and safe exit route to assist those affected by the accident.

However, in the technical field of automation, understanding this as a set of systems capable of automating a building or enclosed space, allows a review of the devices and mechanisms that integrate such systems, in order to achieve improved energy management, enhanced security, improved well-being and improved communications.

In these homes or enclosed spaces in which automation is used, elements of enclosure such as doors and windows, are some of the most important elements as these elements form the border between the aforementioned room and the outdoors, so it is necessary to achieve a more precise control of these as multiple conditions of the room rely on them such as security, temperature, humidity or lighting.

Currently, the few components that exist for home automation applicable to door and window control are gadgets that work directly by cable or by means of X10 technology. This X10 technology consists of a protocol of communications for the remote control of electric devices that transmits the information via radio and uses the pre-existing electric line or a battery to transmit control signals between the room's automation devices in digital format. This makes it difficult for the user to either understand or control the state of these elements of enclosure from whatever geographical location he may find himself. Similarly, the door and window controllers that currently exist are very cumbersome and no doors and windows currently leave the factory with the device already fitted. The controllers are external to the enclosures, normally cumbersome, limited in functions, without any type of logic and complicated to fit, which also present original programming that allows no updating, which is why they do not give good results faced with variations in the needs of the user.

To overcome these shortcomings, document ES1148983U describes an automated enclosure controller device, which forms part of an automated management system for various devices in a building or enclosed space, which comprises a computer application for controlling enclosures presenting an automatic mechanism for opening and closing and/or raising and lowering of blinds as presented here, comprises a micro-computer the motherboard of which comprises a micro-processor, a hard drive for storage with an operating system, RAM memory, the means for the micro-processor to communicate with the computer application and with other devices of the automation system and a series of connectors, where the means of communication consist of a wi-fi connection.

The automated enclosure controller device comprises, in turn, a secondary motherboard connected to one of the connectors of the motherboard of the micro-computer and presents the means for connecting the device with the automatic mechanism of the enclosure and at least one sensor, integrated into it, and a wraparound casing for all these elements, where the aforementioned casing is seated in a component of the enclosure. Other similar documents known in the state of the art are the documents US 2012/0188627 and WO 2013/008252. Notwithstanding, none of these documents has all the characteristics of the invention set forth below.

In the art it is disclosed the document US9677327 which discloses a smart window-based security system is provided. The system includes a plurality of smart windows, each smart window of the plurality of smart windows having at least one electrochromic window and at least one sensor integrated into the smart window. The plurality of smart windows is coupled together in a system having at least one processor configured to detect a personal or property security threat, such as an intruder or fire based, on information from sensors of the plurality of smart windows.

The document US 2017/095103 discloses a motor drive system for operating a mechanism for raising and lowering window coverings includes a motor operating under electrical power and an electrically powered drive system. The motor drive system advances a continuous cord loop in response to positional commands from a controller. An input-output device includes a capacitive touch strip that receives user inputs along an input axis, and an LEDs strip aligned with the input axis. A group mode module communicates the positional commands to other motor drive systems within an identified group to operate respective other mechanisms of the other motor drive systems. A set control module enables user calibration of a top position and a bottom position of travel of the window covering. The input-output device extends vertically on the exterior of a housing for the motor drive system, and the housing supports input buttons of the group mode module and the set control module.

Finally, document US 2015/097689 discloses an application on a mobile device to establish first wireless communications with a first hazard detector that was previously paired with the user account. The method may also include transmitting, to the first hazard detector and using the first wireless protocol, a transmission that instructs the first hazard detector to establish second wireless communications with a second hazard detector, where the second wireless communications use a second wireless protocol. The method may additionally include transmitting network credentials to the first hazard detector using the first wireless protocol, where the credentials are then sent from the first hazard detector to the second hazard detector using the second wireless protocol, such that the second hazard detector can pair with the user account using the first wireless protocol.

### Description of the invention

The purpose of the present invention is an automated control device which starting out with a conventional door or window that, providing passive protection against any external meteorological agents, or against other types of attack, the door or window of the invention also establishes active protection thanks to it being able to perceive temperature, interior and exterior humidity, to know the position of the sun and the index of UV ray incidence on the door or window. In this way, it is capable of reacting actively to meteorological adversities and configuring elements such as the height of the blinds, the lowering of awnings or curtains and the opening of door leaves or window sashes, as well as turning the air-conditioning on/off. It is for this reason that the control device used for doors or windows is an important tool for the energy efficiency of the home, as well as providing security to the home passively, like any traditional door or window. Furthermore, the control device is capable of perceiving through its sensors when a door or window is being forced or when said enclosure is open so that it: (a) sends the information to an application (App) on the user's mobile phone, setting off an alarm and notifying the security company; and (b) enters an active defence mode lowering the blinds to make entry difficult and activating a camera to record a video that may identify the aggressors.

The control device communicates externally (app or cloud) by means of wireless protocol (WI-FI) and between control devices by means of the «*thread*» protocol, being capable of interacting with other pre-existing automation in the home and which, logically, uses these protocols.

The control device, therefore, fulfils various functions: (i) it electrically feeds the motors of the blinds, curtain or aperture; (ii) supports the protocols of communication (WI-FI and «*thread*»); (iii) has an interface with buttons to interact with the blinds or means of opening the door or window; and (iv)
supports the connections of the external sensors.

The housing of the sensors and communications in the intelligent door or window is strategically placed on the outside of the door or window in order for them not to make a Faraday Cage. The device is «*plug and play*»*,* which means, once installed it only needs to be synchronised with the App to make all its systems operative.

One of the fundamental characteristics of the invention is its use of artificial intelligence, which resides in an external remote server (in the cloud). Thanks to this, the invention can learn from the habits of the users, look for the best energy efficiency ratio and manage alarms and alerts. The connection is made via a WI-FI router, without the need for additional components. This allows the user of the invention to interact with it remotely. The way of interacting with the invention is defined by the invention itself through a plurality of services reflected on the associated App for managing it on their own mobiles. The invention is able to connect with the exterior thanks to the elements it has integrated in its electronic circuit, the protocols that control these chips are the following: Wifi (802.11 b/g/n) and «*Thread*» (IEEE 802.15.4). The communications of the invention can select the way it communicates with the two protocols or with a combination of both.

The purpose of the invention is achieved with an automated control device with the characteristics of claim 1. Other additional characteristics are described in the dependent claims.

More specifically, the control device that is the object of the invention comprises the following characteristics: (a) the device is completely integrated in the door or window and is imperceptible from the outside; (b) works without the need for cells or batteries; (c) connects the remote server directly with the wireless network of the home and protocol 802.11 b/g/n , without the need to use a Hub or Gateway; (d) connects to the rest of the home's automation via the «*Thread*» protocol (Protocol IOT); (e) comprises extensions to expand its hardware; (f) can function remotely from outside the home via a connection to the remote server, or directly inside from a local connection.

The device of the invention is an automated system designed to be fitted to the window or door by manufacturers, leaving the device totally integrated in the window and forming part of it. Its main functions are:
- Blinds control by App or by the capacitive switch integrated in the window.
- Tilt and turn opening by App or by the capacitive switch integrated in the window.
- Inside temperature and humidity of the property.
- See the state of the window (open/closed)
- Exterior Light/ UV Radiation Sensor
- Opening alarm.
- Broken glass alarm.
- Attempted forced entry alarm.
- Wi-fi inhibition alarm.
- Electrical power failure alarm.
- Temperature and humidity alarm.
- Air quality sensor.
- It is capable of interacting with other elements of automation through pairing and/or
   integration. Thus, it sends the readings of these data to its cloud to make a larger database for decision-making.
- Encryption of domestic communications by means of the «Thread» protocol
- Communication with the rest of the home's automation by means of the «Thread» protocol.

All the services and information of the system feed off each other so that the window's actuators can get to operate under the rules that regulate them.

Throughout the description and the claims the word «comprises» and its variations do not claim to exclude other technical characteristics, additives, components or steps. For those skilled in the art, other purposes, benefits and characteristics of the invention will emerge partly in the description and partly in the use of the invention. The following examples and drawings are provided for illustrative purposes, and are not intended to restrict the present invention. Moreover, the present invention covers all the possible combinations of particular and preferred embodiments indicated here.

### Brief description of the drawings

The following very briefly describes a series of drawings that help to better understand the invention and which expressly relate to a representation of said invention which is presented by way of a non-limiting example of it.

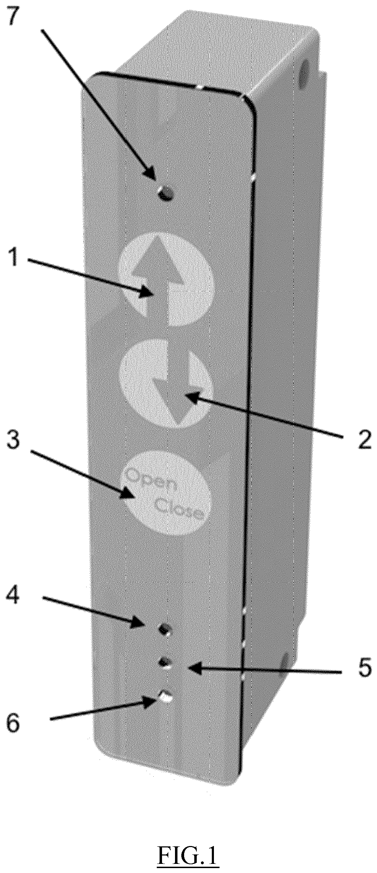

FIG.1 shows a perspective view of the invention.
FIG.2 shows a perspective view of the device of FIG.1 integrated in a metallic joinery profile.
FIG.3 shows a cross-sectional view of FIG.2.

### Disclosure of a detailed embodiment of the invention

As you can see in the attached figures, the device that is the object of the invention is installed in the vertical part of the frame or in a complementary extension profile, attached to it. This device can be fitted on the right or left part, as it favours neither hand.

In appearance, it is a simple capacitive blinds switch, as in the front part (the part that can be seen) the two buttons to raise (1) or lower (2) the blinds can be seen, as well as the buttons to open/close (3) the door leaf or window sash.

The button part is made of tempered glass and comprises three drilled holes that each measures 3 mm in all its dimensions. The first hole leaves the temperature sensor (in this representation, a thermocouple). The second hole (5) is for the property's indoor air humidity sensor. The third hole (6) is designed to access the reset button with a sharp element. There is also another hole (7) for the air quality or flammable gas sensor.

The reset button (6) is designed so that in case there exists a wireless network (SSID and password) the device of the invention can be left in «point of access» mode and, in this way, can be paired with another different wireless network. The first time the door or window connects to the property's network, the system will show as being in «point of access» mode. Subsequently, from the user's APP a door or window will be selected and the APP will send him/ her the home's WI-FI details. It is at this moment when it is paired that the device becomes part of the network and disappears as a point of access. When the password of the WI-FI router, or another router with a different SSID, needs to be changed, a reset will be performed for each device, leaving it once again as a «point of access».

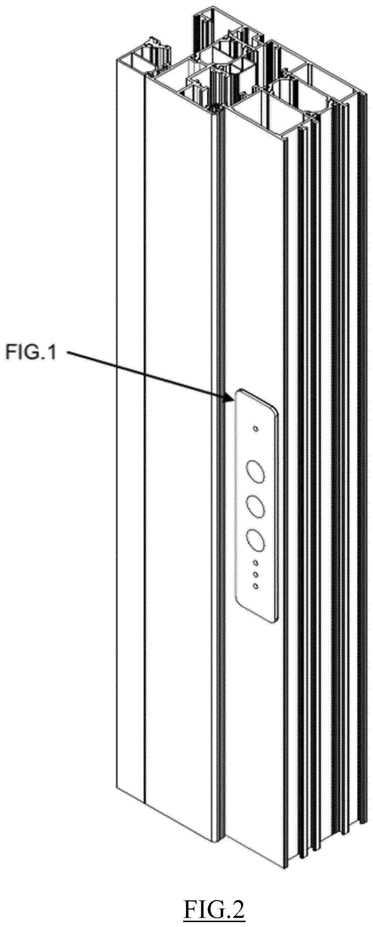

The device that is the object of the present invention is designed to be used on any wood, PVC, aluminium or metal door or window on the market. Therefore, the present invention is configured as a device that is set into the frame of the door or window by means of a small machining. In this way, all the connections are made on the inside leaving just the switch screen, totally flush with the joinery, as shown in FIG.2. In a practical embodiment of the invention, the machining is of reduced dimensions, 22 mm wide by 90 mm long and 40 mm deep. This machining in the profile will be produced by the door or window manufacturer to enable the device to be housed discreetly.

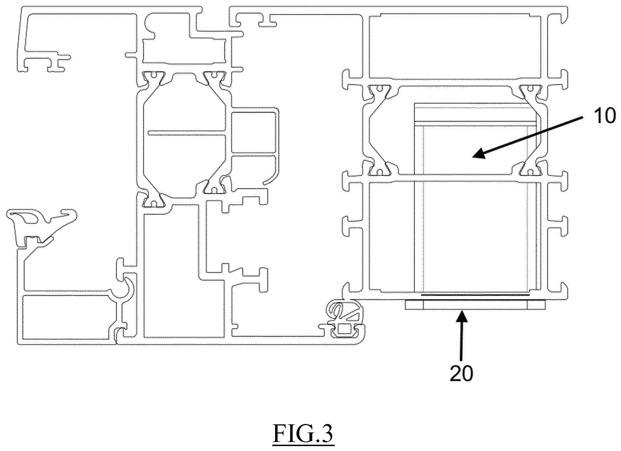

Physically, the circuit integrated in the device of the invention is made up of two parts (10,20) making an «L» as shown in figure 3. The part that is inserted into the window (10) comprises all the power design, such as the transformer and the actuator relays. The switch part (20) is the part that is flush with the door or window frame and which, as well as containing the switch, has the temperature sensor, the humidity sensor, the reset button and the WI-FI circuit and the one that implements the «thread» protocol.

The WI-FI circuit (protocol 802.11 b/g/n) is responsible for connecting the device to the remote server to enable it to be governed by the APP or WEB service. The WI-FI communications are encrypted by WPA or WPA2. For this, the invention implements an algorithm to change the encryption seed once every 24 hours. This encryption seed propagates through the whole of the architecture of the network of doors and windows and through the remote server. In this way it makes it impossible to obtain the encrypted password using «*sniff*» as the time required to work it out is more than 24 hours.

For communication between the invention's devices, a commercial circuit that implements the «Thread» protocol is used, such as, for example, the «*EM358x y EM359x SoCs for zigbee*® *and Thread»* circuit. This protocol is used to connect several automated devices, such as the invention or other compatible ones, to the local network. Thus, if a door or window at the end of the property has no wireless signal, the windows create an internal network encrypted by this protocol which interconnects all those with a connection to the remote server.

The «Thread» protocol uses standards like IPv6 and 6LoWAN which have the capacity to easily and safely connect hundreds of devices in a mesh network, which is a type of network that provides more coverage and load balancing capacity. Among the advantages of the network, its capacity to scale up hundreds of devices with no points of failure, which ensures that the connected devices are available when necessary, stands out. Safety is another point in favour of this protocol, as it is offered by means of a high level encryption. Finally, it is worth noting that users will be able to connect devices that are compatible with «Thread» to each other and with the remote server by means of the users' portable electronic device or computer.

The device of the invention comprises a vibration sensor or accelerometer which can send two values to the remote server and the user's application (app), that the application will interpret to assess the alert level. The first value would be the intensity of the vibration on its own scale and the second data it sends is the time of the vibration. Thus, the system assesses the type of threat and alerts the APP if it is broken glass or a forced door or window.

The opening sensor used in the device of the invention is any magnetic sensor. The opening sensor is made up of three parts: on one side, we have the opening sensor with its coupling piece for joinery and, on the other, there is the magnetic actuator that is fixed to the leaf. The sensor is fitted to the frame, on the inside part of the active leaf and near the hinges, although it can also be installed on the vertical of the active leaf. There is also the possibility of interconnecting various sensors from the same door or window (if the door or window has more than three leaves or sashes) in line and controlling them as if there were just one.

Moreover, the device incorporates an air quality or CO2 sensor. This sensor can be of two different types: integrated in the circuit itself or connected to said circuit and housed in the upper horizontal pole of the door or window by means of a machining.

The device of the invention comprises a UV sensor, which connects by means of a cable to the circuit of the device and which will be fitted to the outside of the door or window. Thanks to this sensor it is possible to monitor the level of solar radiation, as well as the spectrum striking the window and which is, therefore, entering the inside of the property through the glass. These data not only arrive at the system's APP, but are also recorded on the external remote server (in the cloud). When the values exceed the programmed thresholds, the system will activate the blinds, awnings, curtains or the aperture of the window sash to achieve the most efficient environment from an energy point of view and safest from the point of view of the health of the occupants of the house.

### Control method of the automation device.

Once the device is connected to the electricity, the device executes a process of checking and calibration which comprises, in turn, the stages of:
(a) Checking that the door or window has a blinds motor connected:
   a. wherein the check is performed by measuring the electricity consumed by the relays, so that if they do not consume no blinds exist and the service is not initialised, the blinds switch is disconnected so that the user perceives no interaction; and
   b. in the case where blinds are available, a calibration process will be performed in two steps:
      i. to raise the blinds as far as they will go; the device detects through its consumption that the motor has stopped and memorises its highest position, as well as the time taken in the process; this data is stored in the device of the invention and sent to the remote server that integrates the system; this position «blinds_up» will auto-calibrate each time the window loses connection to the electricity supply or is reset;
      ii. to lower the blinds as far as they will go, memorising in this case the state of the lowest position, as well as the time taken in the process; and where this data is stored on the device and is sent to the remote server connected to the device of the invention, remotely, with the position «blinds_down»;
      iii. to calculate the intermediary positions, as thanks to steps (i)-(ii) the system is capable of knowing the state of the blinds because the raising and lowering times have been measured; thanks to this, and via the user's application the blinds can be told to, for example, rise to three quarters of their maximum height, or halfway up, from a menu of predefined positions on the user's application.
(b) Checking that the door or window has an opening motor connected:
   a. Wherein the check is performed whenever the system is active, by reading a «system status» signal: if it receives an «active» signal it will proceed to the calibration phase; meanwhile, if no signal is received, the system will be deemed deactivated and will not show up either on the user's APP nor will it send any signal to the remote server.
   b. In the case where an opening motor is available, a calibration process will be performed in two steps:
      1. Open the door or window as far as it will go, memorising its most open position and the time taken in opening the door or window.
      2. Close the door or window as far as it will go, memorising its most closed position and the time taken in closing the door or window.
      3. Know the position of the door or window and calculate the intermediary positions based on the opening and closing times of the window.
(c) Checking that the door or window has an opening sensor connected.

After the checking and calibration process, a communication process is established between the device of the invention and a remote server which, in turn, is connected with an APP installed on the user's portable electronic device or it is also available via a WEB application. The windows or doors with the automation devices never communicate directly with the APP. For communication, whether inside the property or outside, the remote server is used to interconnect the services of the door/window and property with the mobile application. The communication channel with the outside will be the WI-FI network, so a proprietary device such as a Hub or Gateway, will not be necessary as the communication is made directly with the property's WI-FI router by means of the 802.11 b/g/n protocol.

Thus, the device of the invention implements a process of remote communications via the WIFI (802.11 b/g/n) and Thread (IEEE 802.15.4) protocols. The device can communicate through either of the two protocols or via a combination of both.

The WI-FI communication process comprises the stages of:
(a) connecting the device that is the object of the invention to the electricity network;
   a. so that when the device connects for the first time it activates a point of access generating its own network;
(b) providing the WI-FI network data via the user's APP;
   a. in this way the device of the invention registers on the WI-FI network and the router provides an IP address by means of DHCP;
(c) sending the data of the device of the invention to the remote server including, at least: the IP address, a unique identifier of the device of the invention and services it provides;
   a. so that the information is sent to the user's APP from the remote server, so that the door or window can be controlled via the APP itself.

The «Thread» communication process comprises, at least, a connection stage with compatible automation devices, so that this type of communication would be oriented towards the incorporation of the device into a local area automation network. This protocol has the advantage of being safer, more energy efficient, it is an open protocol which transports IPV6 natively, is based on a mesh network that does not allow points of failure in the network and is executed on standard 802.15.4 radio. In any case, we would arrive at a network architecture made up of all the devices present in the same property.

In either of the two communication processes a communication encryption process is established. For any interchange of information between any of the components that generally intervene in the communications (control device/ remote server/ the user's portable electronic device) an encryption on two virtual layers, is performed:
(a) a first layer of communication encryption, whereby a «token» is requested for the encryption of the same; where said «token» identifies the communication for its validation on the server and which comprises requesting the server for a token (PToken) for a first level encryption;
(b) a second layer of encryption of the information, so that once the communication is authenticated, what it does is encrypt the user's communication; and where this encryption is performed using what is called *User_Token* which was generated when the user registered on the system and a home was created in which were added the control devices according to the invention; and where the messages are encrypted via the token from the first layer of encryption and by the User_Token.
(c) And where the encryption seed changes once every 24 hours

### Remote server

The remote server comprises a database structure, which is the essential part for the correct functioning of the system. It is on the server where the different services and databases are housed. The remote server comprises the means to execute the following services:

### Account registration service:

Before being able to use a device and link it to the App, the user must register on the remote server. It is at this moment and by means of the account registration service where the user is assigned space on the account database and the structure of these is created. Three types of account can be created and the devices assigned using this service:
Main or master account: This is the main account to which the added devices can be linked and from which secondary or slave accounts can be created.
Secondary accounts: Secondary accounts have at their disposal all the same services as main ones but cannot create other accounts.
Slave or unprivileged accounts: this type of account is created by the main one and has a more restricted radius of action both in the devices it controls and the services executed.

Thanks to this service when the master account creates others, these new ones inherit all the information from the main one.

### Account database:

This database manages all the accounts and their hierarchies linking them to the other databases and services.

### Device databases:

In this database is stored all the information from the devices added to a property, this database links to the other databases and services.

### Synchronisation service:

This is one of the remote server's most important services, as it creates a constant link between the device, the remote server and the customer's application. This service is responsible for updating the APP's changes of status, and sending the alerts to attend to the APP's requests.

### Updating service:

This service memorises the APP versions used by each user, thus managing the updating of the APP for a more modern one when necessary. In the case where new updating services are incorporated it will create the necessary structure in the remote server.

### Logic service:

This is one of the environment's most complex services and comprises four different states:
The inert or deactivated state, this state is selected and managed in the database in the case where using logic is not desired or when the remote server will not provide logic, as this will be provided by another remote server of another developer with privileges.
The scenario state has the authority to create different scenarios for the control of the windows or doors. For example: if it detects rain, it lowers the blinds or closes the window.
The energy efficiency state uses logic to create an efficient and comfortable property with the elements it has at its disposal. By knowing the inside temperature and humidity by means of its sensors, by knowing the outside temperature, humidity, position of the windows in the property, the position of the sun, the system will use the opening of the window and the position of the blinds to facilitate a low-energy consumption, comfortable environment. For example, in the case of windows affected by direct sunlight with an outside temperature of more than 23 degrees the system will lower the blinds to an optimum position and will open the windows in tilt position to ventilate the inside. In the rest of the house where the windows are not affected by the direct action of the sun these measures will not be taken.
The logic state learned uses the database to learn the users' patterns, correct them on the database through learning and imitate them to avoid the user having to do so him/ herself as the system will anticipate the need.

### Data storage service:

This service assigns space in the remote server's memory to store users' data.

### Security service:

This is another of the vital services for the system as it manages the Alarms, alerts and notifications of each one of the users. Two modes exist for this service:
Automatic attachment mode: This mode is designed so that you do not have to be connecting and disconnecting the alarm each time you enter or leave your home. When the first user enters the property the system detects that the user's mobile electronic device is connected to the home's wi-fi creating a call to the remote server and deactivating the alarms automatically. When the last of the property's users leaves the home the device sends a notification to the remote server activating the alarms.
In manual mode: the alarms will not activate for each user manually and by user, with each user being sent the alerts that he/she has activated. The available alarms are the following:
   Window or door opening alarm.
   Maximum or minimum temperature inside the property alarm.
   Maximum or minimum humidity inside the property alarm.
   Broken Window or Forced Entry alarm.
   Loss of WI-FI connection or electricity supply.
   Window or Door Opening alarm:
      When the window's opening sensor detects a change in state, it sends this to the remote server where it is checked to see if the alarm service is activated. If the alarm service is activated it will send an alert to the users' mobiles, the user's app will activate the alarm mode and the alarm will start to sound and the screen will start to blink. Furthermore, it will send an electronic mail to the master user with all the information about the alarm such as, for example, the window that has opened, the room where it opened and the time of the incident.
   Maximum or minimum temperature alarm:
      It works like the one above. It sends us an alarm in alert mode and electronic mail. This data is both for managing energy efficiency as well as for detecting a fire owing to the drastic rise in temperature. Humidity alarm:
      By also being informed about humidity we achieve a more healthy property with humidity levels that do not facilitate the propagation of mould or bacteria.
   Broken glass or forced entry alarm:
      When its accelerometer sensor detects a strong peak in vibration the system will notify the user by alerts, alarm and mail. If the activation peaks are lower, but during a sustained period the assessment of the device will be to activate the forced entry alarm. The sensitivity levels are adjustable via the APP.
   Loss of Wi-fi or electricity alarm:
      All the devices update their state on the remote server several times a minute by means of information packets. If during a defined period of time no reply is received from the remote server the service will activate the alarm and send the alerts and email to the user/users with information about it.
   Analysis service:
      This service is responsible for auditing all the data generated by all the devices to create future corrective update actions that improve the system.
   Services database:
      It is here where the different services created to date are managed or new ones are added as updates are incorporated.
   Third party applications:
      It is possible to add third party hardware developments to our system. For example, we can add air quality sensors, radiation sensors or IPS cameras by means of and managed from the remote server itself.

## Claims

1. A method for controlling at least one automation control device, the method comprising the steps of:
checking and calibrating an automation control device;
establishing a first communication channel with at least one automation control device for creating a local area network;
establishing a second communication channel with at least one external remote server;
establishing a third communication channel between the external remote server and at least one user's portable electronic device; wherein the establishing of the third communication channel comprises a communication encryption process with two layers of encryption:
wherein in a first layer of encryption of the communication, a token is requested which identifies the communication for validation on the external remote server and which comprises requesting a first token from the external remote server; and
wherein in a second layer of encryption of information of the communication, once the communication has been authenticated on the external remote server, the user's communication is encrypted; and wherein this encryption is performed using a second user token and where messages are encrypted by means of the first token from the first encryption layer and by the second user token from the second encryption layer; and
wherein an encryption seed of the encryption process changes at least once every 24 hours;
and **characterized in that** the checking and calibrating of the automation control device further comprises the steps of:
checking that a door or window of the automation control device has a blinds motor connected:
wherein the check is performed by measuring the electricity consumed by relays, so that if the relays do not consume any electricity no blinds exist, and the service is not initialised, the blinds switch is deactivated so that the user perceives no interaction; and
wherein in the case where blinds are detected, a calibration process is performed in two steps:
raising the blinds as far as they will go; the device detects through its consumption that the motor has stopped and memorises its highest position, as well as the time taken in the process; this data is saved in the device's memory and sent to the external remote server; and wherein this position will auto-calibrate each time the window loses connection to the electricity supply or is reset;
lowering the blinds as far as they will go, memorising in this case the state of the lowest position, as well as the time taken in the process; and wherein this data is stored on the device and sent to the external remote server connected to the device remotely; and
calculating the intermediary positions by means of the raising and lowering times and establishing the position of the blinds remotely from the user's portable electronic device;
checking that the door or window of the automation control device has an opening motor connected:
wherein the check is performed as long as a system comprising the device is active, by reading a «system status» signal: if it receives an «active» signal it will proceed to the calibration phase; meanwhile, if it does not receive a signal, the system will be deemed deactivated and will not show up on the user's portable electronic device nor will it send a signal to the remote server;
and wherein when an opening motor is detected, it will perform a calibration process comprising:
opening the door or window as far as it will go, memorising its most open position and the time taken in opening the door or window;
closing the door or window as far as it will go, memorising its most closed position and the time taken in closing the door or window; and
establishing the position of the door or window and calculating the intermediary positions based on the opening and closing times;
checking that the door or window of the automation control device has an opening sensor connected; and
checking that the door or window of the automation control device has an
air quality sensor connected.

2. The method according to claim 1 wherein the process of establishing a channel of communication with at least one automation control device comprises creating a local area network by means of the «thread» communication protocol.

3. The method according to claim 1 comprising the stage of activating the blinds, awnings, curtains or the opening of the window sash when Ultraviolet, UV, radiation thresholds are exceeded.

4. The method according to claim 1 wherein the first time the device connects to a property's wireless network, a door or window will be selected from the user's portable electronic device and the details of the property's wireless network will be sent; it is at this moment when the device has paired with it that the device becomes part of the network in such a way that whenever the password of the property's wireless network needs changing or another router with a different service set identifier, SSID, is connected to, each device will be reset.

5. An automation control device that is totally integrated in the frame of a door or window comprising:
a capacitive switch flush-mounted in the door or window frame;
a plurality of sensors;
wireless communication facilities;
a processor;
a memory; and
one or more programmes where said programmes are stored in a memory and configured to execute by means of the processor(s), **characterised in that** the programmes include instructions for:
checking and calibrating a state of the device;
detecting an activation of at least one sensor;
generating an alarm according to the activation of at least one of the sensors;
communicating with other automation devices through pairing and/or integration by means of a local area communications network;
communicating with an external remote server by means of a WI-FI wireless network in the property; and
encrypting the communications with the remote server;
the automation control device comprising further means to perform all the steps of the method according to any of claims 1 to 4.

6. The device according to claim 5 wherein the switch comprises a front panel fitted flush with the door or window frame and made from tempered glass and comprises three drilled holes, where the first hole consists of a temperature sensor fitted flush with the glass; the second hole houses a humidity sensor for the inside of the property; and where the third hole gives access to a reset button.

7. The device according to claim 5 comprising a vibration sensor or accelerometer configured to establish the intensity of vibration on its own scale and the time of vibration.

8. The device according to claim 5 comprising an opening sensor which consists of a magnetic sensor and which is made up of the opening sensor, with its coupling piece for the door or window frame and the magnetic actuator which is fitted to the leaf or sash; where the sensor is fitted to the frame, on the inside part or on the vertical of the active leaf or sash and close to the hinges.

9. The device according to claim 5 incorporating an air quality or CO2 sensor, wherein the sensor is housed in the top horizontal pole of the door or window by means of a machining.

10. The device according to claim 5 comprising a Ultraviolet, UV, sensor, connected by cable to the device's circuit and which is located on the outside of the door or window and which is configured to monitor solar radiation levels, as well as the spectrum striking the window and which, therefore, enters the inside of the property through the glass.

## Patentansprüche

1. Methode zum Steuern mindestens einer Automatisierungssteuerung wobei die Methode die folgenden Schritte umfasst:
Prüfen und Kalibrieren einer Automatisierungssteuerung;
Herstellen eines ersten Kommunikationskanals mit mindestens einer Automatisierungssteuerung zum Aufbau eines lokalen Netzwerks;
Herstellen eines zweiten Kommunikationskanals mit mindestens einem externen Remote-Server;
Herstellen eines dritten Kommunikationskanals zwischen dem externen Remote-Server und mindestens einer tragbaren elektronischen Vorrichtung eines Benutzers; worin das Herstellen des dritten Kommunikationskanals einen Kommunikationsverschlüsselungsprozess mit zwei Verschlüsselungsebenen umfasst:
worin in einer ersten Verschlüsselungsebene der Kommunikation ein Token angefordert wird, das die Kommunikation zur Validierung auf dem externen Remote-Server identifiziert und das das Anfordern eines ersten Tokens von dem externen Remote-Server umfasst; und
worin in einer zweiten Verschlüsselungsebene von Informationen der Kommunikation, sobald die Kommunikation auf dem externen Remote-Server authentifiziert wurde, die Kommunikation des Benutzers verschlüsselt wird; und worin diese Verschlüsselung unter Verwendung eines zweiten Benutzer-Tokens durchgeführt wird und worin Nachrichten mithilfe des ersten Tokens aus der ersten Verschlüsselungsebene und mit dem zweiten Benutzer-Token aus der zweiten Verschlüsselungsebene verschlüsselt werden; und
worin sich ein Verschlüsselungsstartwert des Verschlüsselungsprozesses mindestens einmal alle 24 Stunden ändert;
und **dadurch gekennzeichnet, dass** das Überprüfen und Kalibrieren der Automatisierungssteuerung weiter die folgenden Schritte umfasst:
Prüfen, ob an einer Tür oder einem Fenster der Automatisierungssteuerung ein Jalousiemotor angeschlossen ist:
worin die Prüfung durch Messen der von Relais verbrauchten Elektrizität durchgeführt wird, sodass, wenn die Relais keine Elektrizität verbrauchen, keine Jalousien vorhanden sind und der Dienst nicht initialisiert wird, der Jalousieschalter deaktiviert wird, sodass der Benutzer keine Interaktion wahrnimmt; und
worin im Falle, dass Jalousien erfasst werden, ein Kalibrierungsprozess in zwei Schritten durchgeführt wird:
Anheben der Jalousien bis zu ihrem Anschlag; die Vorrichtung erkennt durch ihren Verbrauch, dass der Motor gestoppt hat, und speichert ihre höchste Position sowie die dabei benötigte Zeit; diese Daten werden im Speicher der Vorrichtung gespeichert und an den externen Remote-Server gesendet; und worin diese Position jedes Mal automatisch kalibriert wird, wenn das Fenster die Verbindung zur Stromversorgung verliert oder zurückgesetzt wird;
Absenken der Jalousien bis zu ihrem Anschlag, worin in diesem Fall der Zustand der niedrigsten Position sowie die während des Prozesses benötigte Zeit gespeichert werden; und worin diese Daten auf der Vorrichtung gespeichert und an den externen Remote-Server gesendet werden, der mit der Vorrichtung ferngesteuert verbunden ist; und
Berechnen der Zwischenpositionen mittels der Hebe- und Senkzeiten und Herstellen der Position der Jalousien von der tragbaren elektronischen Remote-Vorrichtung des Benutzers;
Prüfen, ob an der Tür oder dem Fenster der Automatisierungssteuerung ein Öffnungsmotor angeschlossen ist:
worin die Prüfung durchgeführt wird, solange ein System, das die Vorrichtung umfasst, aktiv ist, durch Lesen eines "Systemstatus"-Signals: Wenn es ein "aktives" Signal empfängt, geht es in die Kalibrierungsphase über; wenn es dagegen kein Signal empfängt, gilt das System als deaktiviert und erscheint nicht auf der tragbaren elektronischen Vorrichtung des Benutzers und sendet kein Signal an den Remote-Server;
und worin, wenn ein Öffnungsmotor erfasst wird, ein Kalibrierungsprozess durchgeführt wird, der umfasst:
Öffnen der Tür oder des Fensters bis zum Anschlag, Speichern der am weitesten geöffneten Position und der Zeit, die beim Öffnen der Tür oder des Fensters benötigt wird;
Schließen der Tür oder des Fensters bis zum Anschlag, Speichern ihrer am meisten geschlossenen Position und der Zeit, die zum Schließen der Tür oder des Fensters benötigt wird; und
Bestimmen der Position der Tür oder des Fensters und
Berechnen der Zwischenpositionen basierend auf den Öffnungs- und Schließzeiten;
Prüfen, ob die Tür oder das Fenster der Automatisierungssteuerung mit einem Öffnungssensor verbunden ist; und
Prüfen, ob an der Tür oder dem Fenster des Automatisierungsgerätes ein Luftqualitätssensor angeschlossen ist.

2. Methode nach Anspruch 1, worin der Prozess des Aufbaus eines Kommunikationskanals mit mindestens einer Automatisierungssteuerung das Erzeugen eines lokalen Netzwerks mittels des Kommunikationsprotokolls "thread" umfasst.

3. Methode nach Anspruch 1, umfassend den Schritt des Aktivierens der Jalousien, Markisen, Vorhänge oder des Öffnens des Fensterflügels, wenn Ultraviolett-UV-Strahlungsschwellenwerte überschritten werden.

4. Methode nach Anspruch 1, bei der beim ersten Verbinden der Vorrichtung mit dem drahtlosen Netzwerk einer Immobilie eine Tür oder ein Fenster über die tragbare elektronische Vorrichtung des Benutzers ausgewählt wird und die Details des drahtlosen Netzwerks der Immobilie gesendet werden; in diesem Moment, in dem die Vorrichtung mit ihr gekoppelt ist, wird die Vorrichtung Teil des Netzwerks, sodass, wenn das Passwort des drahtlosen Netzwerks der Immobilie geändert werden muss, oder ein anderer Router mit einer anderen Service-Kennung, SSID, verbunden wird, jede Vorrichtung zurückgesetzt wird.

5. Automatisierungssteuerung, die vollständig in den Rahmen einer Tür oder eines Fensters integriert ist, umfassend:
einen kapazitiven Schalter, der bündig in den Tür- oder Fensterrahmen eingebaut ist;
eine Vielzahl von Sensoren;
Funkkommunikationseinrichtungen;
einen Prozessor;
einen Speicher; und
ein oder mehrere Programme, worin die Programme in einem Speicher gespeichert und konfiguriert sind, um sie mithilfe des Prozessors/der Prozessoren auszuführen, **dadurch gekennzeichnet, dass** die Programme Anweisungen enthalten für:
Überprüfen und Kalibrieren eines Zustands der Vorrichtung;
Erfassen einer Aktivierung von mindestens einem Sensor;
Erzeugen eines Alarms gemäß der Aktivierung mindestens eines der Sensoren; Kommunizieren mit anderen Automatisierungsvorrichtungen durch Kopplung und/oder Integration über ein lokales Kommunikationsnetzwerk;
Kommunizieren mit einem externen Remote-Server über ein drahtloses WiFi-Netzwerk in der Immobilie; und
Verschlüsselung der Kommunikation mit dem Remote-Server;
worin die Automatisierungssteuerung weitere Mittel umfasst, um alle Schritte der Methode nach einem der Ansprüche 1 bis 4 durchzuführen.

6. Vorrichtung nach Anspruch 5, worin der Schalter eine Frontplatte umfasst, die bündig mit dem Tür- oder Fensterrahmen angebracht und aus gehärtetem Glas ist, und drei Bohrlöcher umfasst, worin das erste Loch aus einem Temperatursensor besteht, der bündig mit dem Glas verbunden ist; das zweite Loch einen Feuchtigkeitssensor für das Innere des Gebäudes beherbergt; und worin das dritte Loch Zugang zu einem Rückstellknopf bietet.

7. Vorrichtung nach Anspruch 5 umfassend einen Vibrationssensor oder Beschleunigungssensor, der konfiguriert ist, um die Intensität der Vibration auf seiner eigenen Skala und die Zeit der Vibration zu bestimmen.

8. Vorrichtung nach Anspruch 5 mit einem Öffnungssensor, der aus einem Magnetsensor besteht und aus dem Öffnungssensor mit seinem Kupplungsstück für den Tür- oder Fensterrahmen und dem am Flügel oder Flügel angebrachten Magnetstellglied besteht; worin der Sensor am Rahmen, am Innenteil oder an der Vertikale des aktiven Flügels oder Flügels und in der Nähe der Scharniere angebracht ist.

9. Vorrichtung nach Anspruch 5 mit einem Luftqualitäts- oder CO2-Sensor, worin der Sensor in der oberen horizontalen Stange der Tür oder des Fensters mittels einer Bearbeitung untergebracht ist.

10. Vorrichtung nach Anspruch 5 mit einem Ultraviolett-UV-Sensor, der über Kabel mit dem Stromkreis der Vorrichtung verbunden ist und sich auf der Außenseite der Tür oder des Fensters befindet und konfiguriert ist, um die Sonneneinstrahlung sowie das auf das Fenster treffende Spektrum zu überwachen, und der daher durch das Glas in das Innere der Immobilie eintritt.

## Revendications

1. Procédé de commande d'au moins un dispositif de commande d'automatisation, le procédé :
comprenant les étapes de :
La vérification et l'étalonnage d'un dispositif de contrôle de l'automatisation ,
L'établissement d'un premier canal de communication avec au moins un dispositif de commande d'automatisation pour créer un réseau local distant ;
L'établissement d'un second canal de communication avec au moins un serveur externe distant :
L'établissement d'un troisième canal de communication entre le serveur distant externe et au moins un dispositif électronique portable d'utilisateur ; dans lequel l'établissement du troisième canal de communication comprend un processus de cryptage de communication avec deux couches de cryptage.
Où dans une première couche de cryptage de la communication, un jeton est demandée qui identifie la communication pour validation sur le serveur distant externe et qui comprend la demande d'un premier jeton du serveur distant externe ; et
Où, dans une seconde couche de cryptage d'information de lacommunication, une fois que la communication a été authentifiée sur le serveur distant externe, la communication de l'utilisateur est cryptée ; et dans lequel ce cryptage est effectué en utilisant un deuxième jeton d'utilisateur et où les messages sont cryptés au moyen du premier jeton de la première couche de cryptage et du deuxième jeton d'utilisateur de la deuxième couche de cryptage ; et
Où une graine de cryptage du processus de cryptage change au moins une fois toutes les 24 heures;
et se **caractérise par le fait que** la vérification et l'étalonnage du dispositif de commande d'automatisation comprend en outre les étapes de :
vérification qu'une porte ou une fenêtre du dispositif de commande d'automatisation est équipée d'un moteur de volets connecté :
Où le contrôle est effectué en mesurant l'électricité consommés par les relais, de sorte que si les relais ne consomment pas d'électricité, il n'y a pas de volets et le service n'est pas initialisé, l'interrupteur des volets est désactivé de sorte que l'utilisateur ne perçoive pas d'interaction ; et
Où dans le cas où des volets sont détectés, un processus d'étalonnage est effectué en deux étapes:
Lever les volets au maximum ; l'appareil détecte par sa consommation que le moteur s'est arrêté et mémorise sa position la plus haute, ainsi que le temps pris dans le processus ; ces données sont sauvegardées dans la mémoire de l'appareil et envoyées au serveur distant externe ; et où cette position sera automatiquement calibrée chaque fois que la fenêtre perd la connexion au secteur ou est réinitialisée;
Abaisser les volets au maximum, en mémorisant dans ce cas l'état de la position la plus basse, ainsi que le temps pris dans le processus ; et où ces données sont stockées sur le dispositif et envoyées au serveur distant externe connecté au dispositif à distance ; et
calcul des positions intermédiaires au moyen des temps de montée et de descente et détermination de la position des volets à distance depuis le dispositif électronique portable de l'utilisateur ;
Vérifier que la porte ou la fenêtre du dispositif de commande d'automatisation est équipée d'un moteur d'ouverture connecté :
où le contrôle est effectué tant qu'un système comprenant le dispositif est actif, en lisant un signal « état du système » : s'il reçoit un signal « actif », il passe à la phase d'étalonnage ; en attendant, s'il ne reçoit pas de signal, le système est réputé désactivé et n'apparaît pas sur le dispositif électronique portable de l'utilisateur ni n'envoie un signal au serveur distant;
et dans lequel, lorsqu'un moteur d'ouverture est détecté, il effectuera un processus d'étalonnage comprenant :
Ouvrir la porte ou la fenêtre au maximum,mémoriser sa position la plus ouverte et le temps nécessaire à l'ouverture de la porte ou de la fenêtre ;
Fermer la porte ou la fenêtre au maximum, mémoriser sa position la plus fermée et le temps de fermeture de la porte ou de la fenêtre ; et déterminer la position de la porte ou de la fenêtre et
Calcul des positions intermédiaires sur la base des heures d'ouverture et de fermeture ;
Vérifier que la porte ou la fenêtre du dispositif de commande d'automatisation est munie d'un capteur d'ouverture ; et
Vérifié que la porte ou la fenêtre du dispositif de commande d'automatisation est équipée d'un capteur de qualité de l'air connecté.

2. Procédé selon la revendication 1, dans lequel le procédé d'établissement d'un canal de communication avec au moins un dispositif de commande d'automatisation comprend la d'un réseau local au moyen du protocole de communication de « filetage »..

3. Procédé selon la revendication 1 comprenant l'étape d'activation des volets, stores, rideaux ou l'ouverture de l'ouvrant de fenêtre dans les cas où les seuils de rayonnement ultraviolet, UV et radiation sont dépassés.

4. Procédé selon la revendication 1, dans lequel la première fois que le dispositif se connecte au réseau sans fil d'une propriété, une porte ou une fenêtre sera sélectionnée à partir du dispositif électronique portable de l'utilisateur et les détails du réseau sans fil de la propriété seront envoyés ; c'est à ce moment où le dispositif est couplé à ce dernier dans le dispositif qui fait alors partie du systèmede telle sorte que chaque fois que le mot de passe du réseau sans fil de la propriété doit être changé ou qu'un autre routeur avec un identificateur d'ensemble de service différent, SSID, est connecté, chaque périphérique sera réinitialisé..

5. Dispositif de commande d'automatisation totalement intégré dans le cadre d'une porte ou d'une fenêtre comprenant :
un interrupteur capacitif encastré dans le cadre de la porte ou de la fenêtre;
plusieurs capteurs ;
installations de communication sans fil ;
un processeur ;
une mémoire ; et
un ou plusieurs programmes où lesdits programmes sont stockés dans une mémoire et configurés pour être exécutés au moyen du ou des processeurs, **caractérisé par le fait que** les programmes comprennent des instructions pour :
la vérification et l'étalonnage d'un état de l'appareil ;
détection d'une activation d'au moins un capteur ;
la génération d'une alarme en fonction de l'activation d'au moins un des capteurs , la communication avec d'autres dispositifs d'automatisation par couplage et/ou intégration au moyen d'un réseau de communication local ;
un serveur distant externe au moyen d'un réseau sans fil WI-FI dans la propriété ;
et le cryptage des communications avec le serveur distant ;
le dispositif de commande d'automatisation comprenant en outre des moyens pour exécuter toutes les étapes du procédé selon l'une quelconque des revendications 1 à 4.

6. Dispositif selon la revendication 5, dans lequel l'interrupteur comprend un panneau frontal encastré dans le cadre de la porte ou de la fenêtre et réalisé en verre trempé et comprenant trois trous percés, le premier trou étant constitué d'un capteur de température encastré dans le verre ; le second trou abritant un capteur d'humidité pour l'intérieur de la propriété ; et le troisième trou donnant accès à un bouton de réarmement.

7. Le dispositif selon la revendication 5 comprend un capteur de vibrations ou un accéléromètre configuré pour établir l'intensité des vibrations sur sa propre échelle et le moment des vibrations.

8. Dispositif selon la revendication 5, comprenant un capteur d'ouverture constitué d'un capteur magnétique constitué par le capteur d'ouverture, avec sa pièce d'accouplement pour le cadre de porte ou de fenêtre et l'actionneur magnétique qui est monté sur le vantail ou l'ouvrant ; lorsque le capteur est monté sur le cadre, sur la partie intérieure ou sur la verticale du vantail ou de l'ouvrant actif et à proximité des charnières.

9. Dispositif selon la revendication 5 comprenant un capteur de qualité de l'air ou de CO2, **caractérisé par le fait que** le capteur est logé dans le pôle horizontal supérieur de la porte ou de la fenêtre au moyen d'un usinage.

10. Dispositif selon la revendication 5, comprenant un capteur ultraviolet, UV, relié par câble au circuit du dispositif et situé à l'extérieur de la porte ou de la fenêtre, qui est configuré pour surveiller les niveaux de rayonnement solaire, ainsi que le spectre frappant la fenêtre et qui, par conséquent, pénètre à l'intérieur de la propriété à travers la vitre.
